# EUROPEAN PATENT APPLICATION

(11) **EP 2 384 046 A1**
(43) Date of publication of application: **02.11.2011**
(21) Application number: 11161577.9
(22) Date of filing: 07.04.2011
(51) Int. Cl.: H04W 24/02

(54) **Bluetooth radio device and management application for integration with a telecommunications network**

(30) Priority: 09.04.2010 US 757185
(71) Applicant: Cisco Technology, Inc., San Jose, CA 95134-1706 (US)
(72) Inventor: Stafford, David, Cary, NC 25719 (US); Toebes, John A., Cary, NC 27513-2916 (US); Mecurio, Gregory S., Campbell, NC 95008 (US)
(74) Representative: Kazi, Ilya

(57) **Abstract**

In one embodiment, a method includes determining when a device is in a range of a first aggregator and, if the device is determined to be in the range of the first aggregator, causing the first aggregator to support the device. The method also includes determining when the device is in a range of a second aggregator and not in the range of the first aggregator. When the device is determined to be in the range of the second aggregator, the second aggregator is caused to support the device.

## Description

### BACKGROUND

The disclosure relates generally to communications within telecommunications networks and, more particularly, to efficiently managing and integrating Bluetooth devices within telecommunications networks.

Bluetooth radios, which are commonly found in communications devices such as cell phones and headsets, are generally low power and provide limited communications ranges. For example, if a cell phone and a Bluetooth headset are paired, if the cell phone and the Bluetooth headset are not in relatively close proximity to each other, the cell phone and the Bluetooth headset will be unable to effectively communicate.

The pairing of devices, *e.g*., a cell phone and a Bluetooth headset, generally requires local administration on and/or between the devices themselves. Even where a device, *e.g*., a headset, may be paired with many devices, each time the headset is to be used with one of the devices to which the headset is paired, local administration must occur on and/or between the devices themselves. By way of example, if a headset that is being used with a cell phone is to be used with a computer, local administration must occur to essentially deactivate the paired connection with the cell phone and to activate the paired connection with the computer.

### BRIEF DESCRIPTION OF THE DRAWINGS

The disclosure will be readily understood by the following detailed description in conjunction with the accompanying drawings in which:

FIG. 1 is a diagrammatic representation of a network in which Bluetooth access points, aggregators, or gateways are in communication with a management server or gateway to facilitate interactions between a Bluetooth device and a non-Bluetooth source in accordance with an embodiment.

FIG. 2 is a diagrammatic representation of a network in which Bluetooth access points are in communication with a management server or gateway to facilitate interactions between a Bluetooth device and Bluetooth host arrangement in accordance with an embodiment.

FIG. 3A is a diagrammatic representation of a network in which a Bluetooth client is in communication with a first Bluetooth access point at a time t1 in accordance with an embodiment.

FIG. 3B is a diagrammatic representation of a network, *e.g*., network 300 of FIG. 3A, in which a Bluetooth client is in communication with a second Bluetooth access point at a time t2 in accordance with an embodiment.

FIG. 3C is a diagrammatic representation of a network, *e.g*., network 300 of FIG. 3A, in which a Bluetooth client is in communication with a third Bluetooth access point at a time t3 in accordance with an embodiment.

FIG. 4 is a diagrammatic representation of a Bluetooth access point that includes a Bluetooth adapter in accordance with an embodiment.

FIG. 5 is a diagrammatic representation of a Bluetooth management server in accordance with an embodiment.

FIG. 6 is a process flow diagram which illustrates a method of supporting a Bluetooth radio device from the point of view of a management service in accordance with an embodiment.

FIG. 7A is a diagrammatic representation of a network in which a party, e.g., an individual, with a Bluetooth headset is in the range associated with a first Bluetooth access point in accordance with an embodiment.

FIG. 7B is a diagrammatic representation of a network in which a party, with a Bluetooth headset, e.g., party 712 of FIG. 7A, is in the range associated with a second Bluetooth access point in accordance with an embodiment.

### DESCRIPTION OF EXAMPLE EMBODIMENTS

### GENERAL OVERVIEW

According to one aspect, a method includes determining, using a management service arrangement, when a device is in a range of a first aggregator. If the device is determined to be in the range of the first aggregator, the method also includes using the management service arrangement to cause the first aggregator to support the device. A determination is made, using the management service arrangement, as to when the device is in a range of a second aggregator and not in the range of the first aggregator. When the device is determined to be in the range of the second aggregator and not in the range of the first aggregator, the management service arrangement causes the second aggregator to support the device.

### DESCRIPTION

Bluetooth radios that are commonly found in communications devices have a limited range, and require local administration to enable pairings between communications devices. Further, communications devices that include Bluetooth radios, *e.g*., Bluetooth devices, are unable to pair with non-Bluetooth devices.

In one embodiment, a backbone arrangement which manages Bluetooth radio devices is provided to allow a Bluetooth radio device to be seamlessly paired with any number of end devices, including Bluetooth end devices and non-Bluetooth end devices. The backbone arrangement may include a management server and any number of Bluetooth access points or aggregators. Through the backbone arrangement, a Bluetooth radio device may be supported over a large area and across multiple devices. As long as the Bluetooth radio device remains in the range supported by a Bluetooth access point, the Bluetooth radio device is supported such that the Bluetooth radio device may be paired to an end device.

For example, an owner of a first Bluetooth device such as a Bluetooth headset and a second Bluetooth device such as a cell phone, may pair each of the Bluetooth devices with a Bluetooth access point and, hence, with a management server instead of with each other. Thus, rather than communicating directly with each other, the Bluetooth devices communicate with each other through the Bluetooth access point and/or the management server. The Bluetooth access point may be one of multiple Bluetooth access points which are in communication with a management server within a network. The Bluetooth access point, in cooperation with a management server, determines when the headset has moved out of the range of the original Bluetooth access point which the headset was originally paired. When the headset has moved out of range of the original Bluetooth access point and into the range of a different Bluetooth access point, the management server will cause the different Bluetooth access point to "pretend" to have the same address as the original Bluetooth access point. Thus, the headset will effectively be handed off to the different Bluetooth access point and will, therefore, communicate with the cell phone through the different Bluetooth access point. Such a hand-off occurs substantially automatically, and does not utilize any local administration between the headset and the cell phone. Further, the hand-off between Bluetooth access points allows the headset to move relatively far away from the cell phone, and still be used in conjunction with the cell phone.

As previously mentioned, a network that includes a Bluetooth access point and a management server may allow Bluetooth devices to be substantially paired with both Bluetooth and non-Bluetooth end devices through the Bluetooth access point. For example, a Bluetooth device such as a headset may be paired to a non-Bluetooth device such as an Internet Protocol (IP) phone through a Bluetooth access point.

A one-to-many pairing that does not require local administration to "activate" any particular pairing may effectively be associated with a Bluetooth device, *e.g*., a Bluetooth radio device. For example, a Bluetooth headset may be paired to many devices such that, without local administration between the Bluetooth headset and each device, the Bluetooth headset may be activated with respect to each device. Such a one-to-many pairing via a Bluetooth access point may substantially reduce the need to undo one pairing in order to form another pairing or, more generally, to reduce the need to have multiple individual pairings with multiple devices.

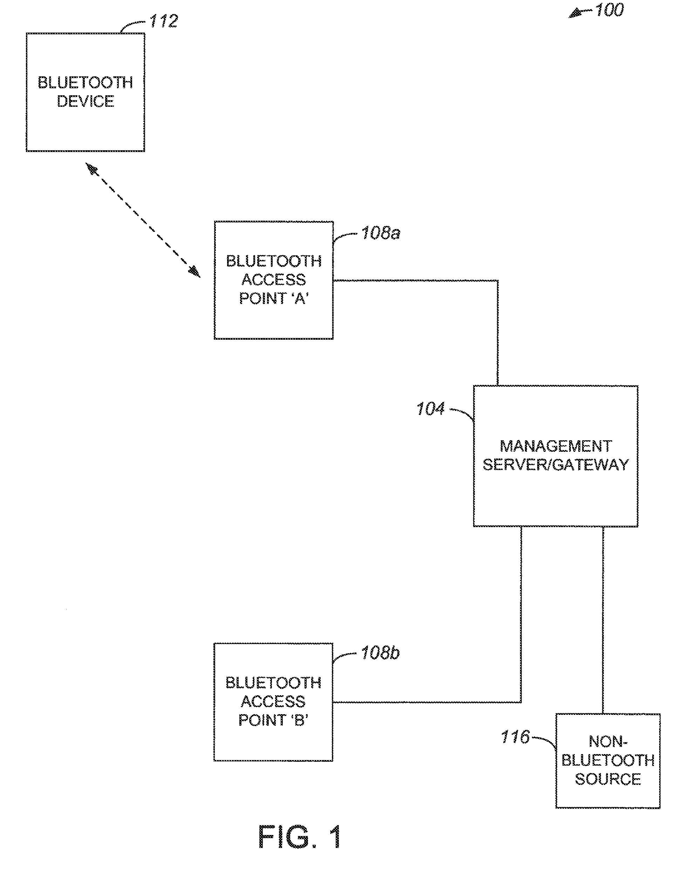

Referring initially to FIG. 1, a network in which Bluetooth access points, aggregators, or gateways are in communication with a management server or gateway to facilitate interactions between a Bluetooth device and a non-Bluetooth source will be described in accordance with an embodiment. A network 100, which may be any suitable communications network such as an IP network, includes a management server or gateway 104, a plurality of Bluetooth access points 108a-b, and a non-Bluetooth source 116. Management server 104 is arranged to exchange non-Bluetooth traffic, e.g., Ethernet traffic, with Bluetooth access points 108a-b, and also with non-Bluetooth source 116.

Network 100 also includes a Bluetooth device 112 which may be, in one embodiment, a Bluetooth headphone or speaker. As shown, Bluetooth device 112 may communicate with Bluetooth access point 'A' 108a such that Bluetooth traffic is effectively exchanged. The communication, *e.g.,* exchange of information, between Bluetooth device 112 and Bluetooth access point 'A' 108a may be managed by management server 104. It should be appreciated that Bluetooth device 112 is generally paired with, or otherwise known to be associated with, management server 104.

Bluetooth device 112 may exchange information with non-Bluetooth source 116. Non-Bluetooth source 116 may be a device such as a non-Bluetooth audio source. For example, content from non-Bluetooth source 116 may be served to Bluetooth device 112 through management server 104 and Bluetooth access point 'A' 108a. Serving the content from non-Bluetooth source 116 to Bluetooth device 112 may involve, in one embodiment, a conversion of non-Bluetooth traffic into Bluetooth traffic for delivery to Bluetooth device 112. Such a conversion may be performed, for example, by management server 104 and/or by Bluetooth access point 'A' 108a.

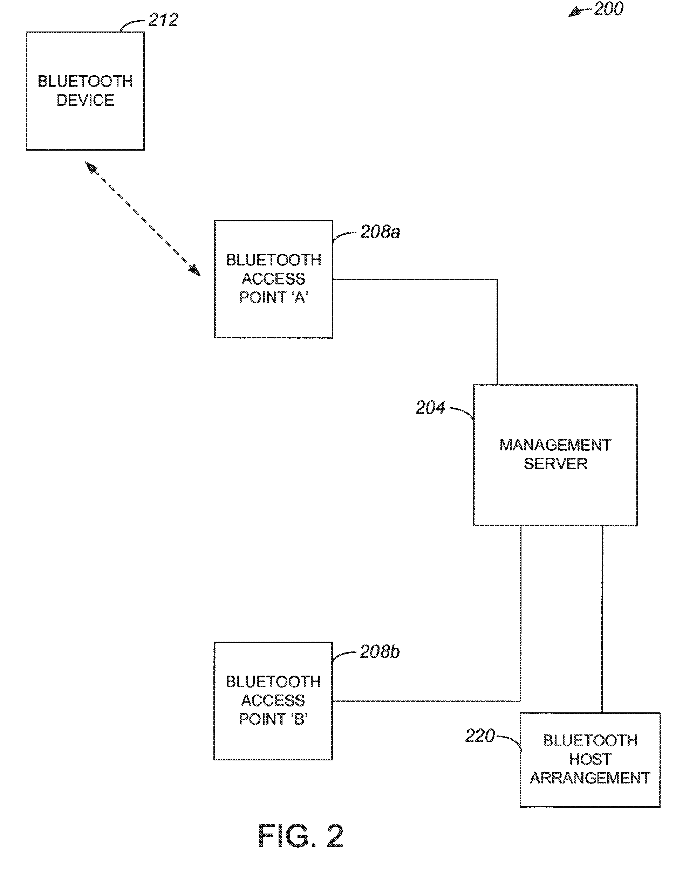

In addition to, or in lieu of, allowing a Bluetooth device to communicate with a non-Bluetooth source through a management server and a Bluetooth access point, a network may allow a Bluetooth device to communicate with a Bluetooth host arrangement through a management server and a Bluetooth access point. FIG. 2 is a diagrammatic representation of a network in which Bluetooth access points or aggregators are in communication with a management server or gateway to facilitate interactions between a Bluetooth device and Bluetooth host arrangement in accordance with an embodiment. A network 200 includes a management server or gateway 204, a plurality of Bluetooth access points 208a-b, and a Bluetooth host arrangement or source 220. Management server 204 is arranged to exchange non-Bluetooth traffic, *e.g.,* Ethernet traffic, with Bluetooth access points 208a-b, and also with Bluetooth host arrangement 220. Bluetooth host arrangement 220 may be any suitable Bluetooth host device including, but not limited to including, a cellular phone.

Network 200 also includes a Bluetooth device 212 that, as shown, communicates with Bluetooth access point 'A' 208a such that Bluetooth traffic is effectively exchanged. The communication, *e.g*., exchange of information, between Bluetooth device 212 and Bluetooth access point 'A' 208a may be managed by management server 204. Both Bluetooth device 212 and Bluetooth host arrangement 220 are paired to management server 204.

Bluetooth device 212 may exchange information with Bluetooth host arrangement 220 via Bluetooth access point 'A' 208a and management server 204. Bluetooth traffic obtained from Bluetooth device 212 may be carried as Ethernet traffic or, more generally, IP traffic, from Bluetooth access point 'A' 208a through management server 204 to Bluetooth host arrangement 220. It should be appreciated that in one embodiment, an intermediate device (not shown) located on a path between management server and Bluetooth host arrangement 220 may convert the Ethernet traffic into Bluetooth traffic for delivery to Bluetooth host arrangement 220. Alternatively, traffic obtained from Bluetooth host arrangement 220 may carried to Bluetooth access point 'A' 204a as Ethernet traffic, and transformed into Bluetooth traffic for delivery to Bluetooth device 212. In one embodiment, traffic maybe carried from Bluetooth host arrangement 220 substantially directly to Bluetooth access point 'A' 204a as Bluetooth traffic.

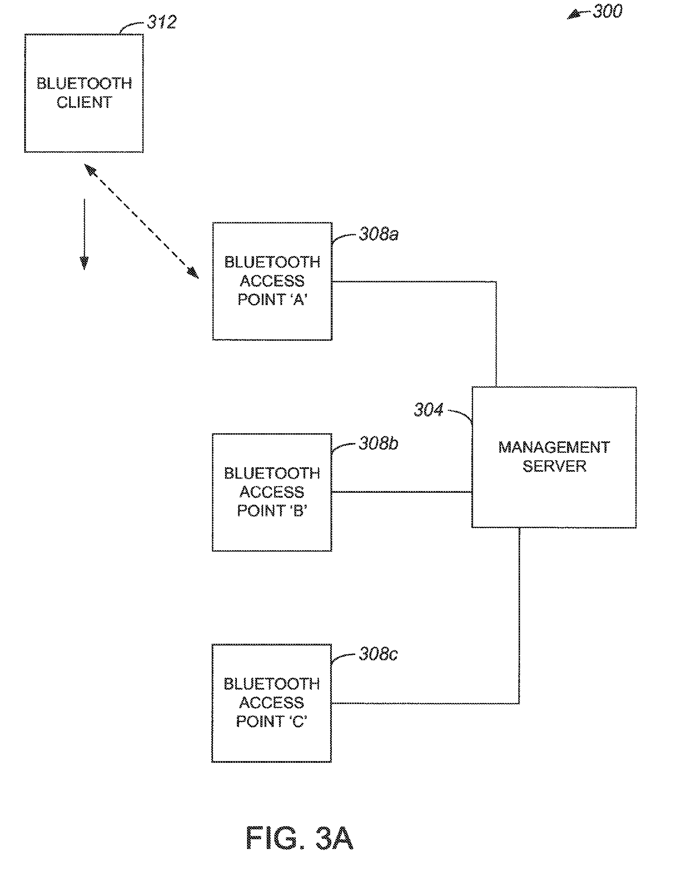

As a Bluetooth device, *e.g.,* a Bluetooth radio device, moves through a network, the Bluetooth device may associate with different Bluetooth access points that are associated with the network. With reference to FIGS. 3A-C, the progression of a Bluetooth device, or more generally, a Bluetooth client, will be described in accordance with an embodiment. A network 300, as shown for example in FIG. 3A, includes a management server 304, a plurality of Bluetooth access points 308a-c, and a Bluetooth client 312. Management server 304 is arranged to manage Bluetooth access points 308a-c such that each Bluetooth access point 308a-c is configured to substantially support Bluetooth client 312. At a time t1, Bluetooth client 312 communicates with Bluetooth access point 'A' 308a. Although Bluetooth client 312 may be moving within network 300, at time t1, Bluetooth client 312 is in a range supported by Bluetooth access point 'A' 308a.

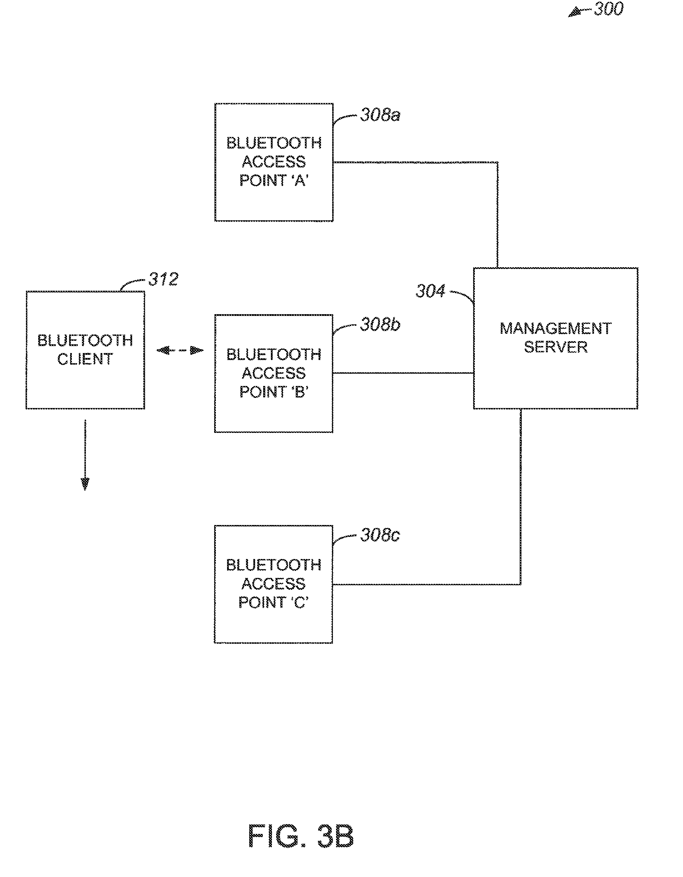

At a time t2, as shown in FIG. 3B, Bluetooth client 312 communicates with Bluetooth access point 'B' 308b, and not with Bluetooth access point 'A' 308a. That is, at a time t2, Bluetooth client 312 has moved within network 300 such that Bluetooth client 312 is no longer in communication with Bluetooth access point 'A' 308a and is, instead, in communication with Bluetooth access point 'B' 308b. Management server 304, as mentioned above, is arranged to facilitate the transition of Bluetooth client 312 from communicating with Bluetooth access point 'A' 308a to communicating with Bluetooth access point 'B' 308b. Such a transition is generally imperceptible to Bluetooth client 312, as Bluetooth client 312 is unaware that "responsibility" for Bluetooth client 312 has effectively been passed from Bluetooth access point 'A' 308a to Bluetooth access point 'B' 308b.

It should be appreciated that in order for Bluetooth client 312 to effectively seamlessly move from the domain of Bluetooth access point 'A' 308a to the domain of Bluetooth access point 'B' 308b, Bluetooth client 312 is generally paired to network 300, *e.g*., at least with Bluetooth access points 308a, 308b. A pairing of Bluetooth client 312 to network 300 may occur using any suitable method including, but not limited to including, a user placing Bluetooth client 312 in an appropriate pairing mode, Bluetooth access points 308a-c identifying Bluetooth client 312 during a scan for devices, and Bluetooth access points 308a-c providing management server 304 with information relating to Bluetooth client 312 being found within network 300.

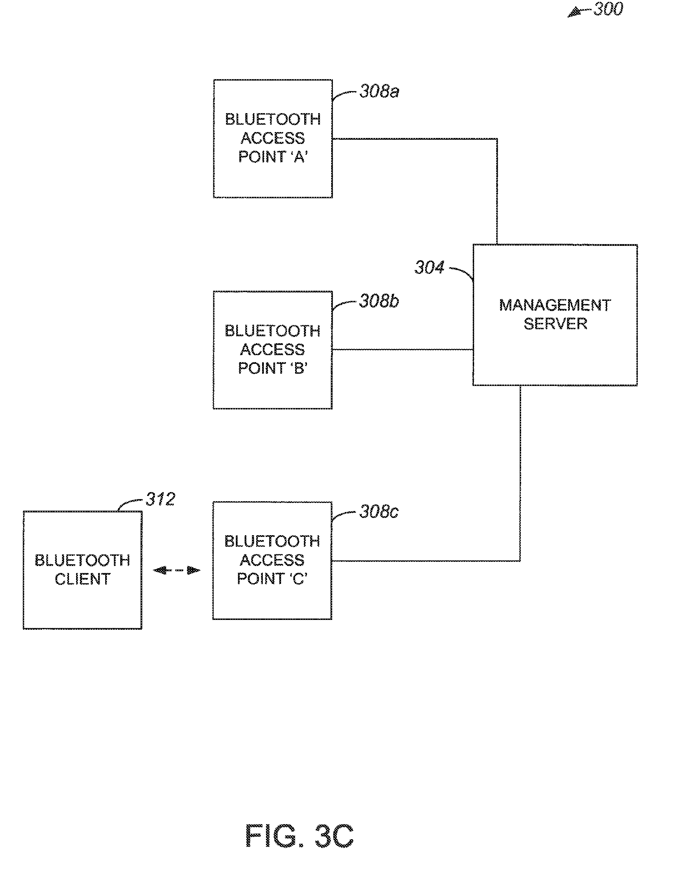

At a time t3, as shown in FIG. 3C, Bluetooth client 312 communicates with Bluetooth access point 'C' 308c, and, thus, has moved within network 300 such that Bluetooth client 312 is no longer in communication with Bluetooth access point 'B' 308b. When Bluetooth client 312 has moved into a range associated with Bluetooth access point 'C' 308c, management server 304 may facilitate the transition of Bluetooth client 312 from communicating with Bluetooth access point 'B' 308b to communicating with Bluetooth access point 'C' 308c.

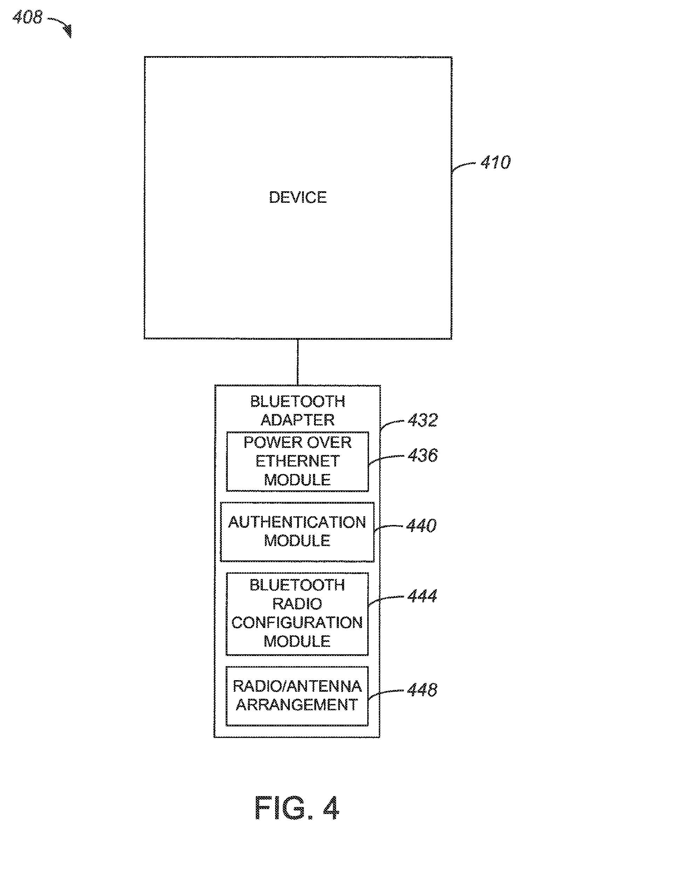

In one embodiment, a Bluetooth access point or aggregator may be any suitable device to which a Bluetooth adapter has been coupled. FIG. 4 is a diagrammatic representation of a Bluetooth access point that includes a Bluetooth adapter in accordance with an embodiment A Bluetooth access point 408 includes a device 410 to which a Bluetooth adapter 432 is at least communicably coupled. Typically, Bluetooth adapter 432 is physically coupled to or otherwise engaged with device 410, although it should be appreciated that Bluetooth adapter 432 is not limited to being physically coupled to or otherwise engaged with device 410.

Device 410 may generally be any suitable device that is capable of cooperating with Bluetooth adapter 432 to operate as a Bluetooth access point. For example, device 410 may be, but is not limited to being, a computer system, a phone device such as an Internet Protocol (IP) phone, a router, a standard access point, and/or any device that may communicate over an RF link as a Bluetoth device.

Bluetooth adapter 432 may generally be any component that is arranged to effectively enable device 410 to act as Bluetooth access point 408. In one embodiment, Bluetooth adapter 432 may be a Power over Ethernet (PoE) pass-through adapter that includes features as described in U.S. Patent No. 7,664,136, which is incorporated herein by reference in its entirety. In such an embodiment, Bluetooth adapter 432 may be a Bluetooth-to-Ethernet adapter such as one that uses PoE via an RJ45 and/or a twisted pair network.

Typically, Bluetooth adapter 432 includes a PoE module 436, an authentication module, a Bluetooth radio configuration module 444, and a radio/antenna arrangement 448. PoE module 436 may be arranged to provide device 410 with power. In one embodiment, PoE module 436 may effectively provide approximately 2.5 Watts (W) of power for the consumption of Bluetooth adapter 432, and/or provide remaining available power to device 410. Authentication module 440 is generally arranged to perform dynamic authentication such that device 410 may join a proper virtual local area network (VLAN), as for example over IPv4, IPv6, or any other suitable Internet layer Protocol for packet-switched networks. Bluetooth radio configuration module 444 is generally arranged to configure a Bluetooth radio (not shown), *e.g*., a Bluetooth radio that is in communication with device 410, based on configurations obtained from a management server or service (not shown). In one embodiment, Bluetooth radio configuration module 444 may configure pairings, configure profiles, and clone Media Access Control (MAC) addresses associated with a Bluetooth radio (not shown) in order to facilitate communications with another Bluetooth radio. Radio/antenna arrangement 448 is enabled to allow a Bluetooth radio (not shown) to communicate with device 410 using Bluetooth radio communications.

Although Bluetooth adapter 432 may generally take any suitable physical form, Bluetooth adapter 432 may be particularly suited to being embodied as a cable, or as a device connected inline with a standard 10baseT cable and a RJ45 connector That is, Bluetooth adapter 432 may be a cable connector, as for example a standard 10baseT Ethernet cable with an RJ45 connector, that is configured to be plugged into device 410 at one end and into a local area network (LAN) at another end. Alternatively, Bluetooth adapter 432 may generally be any suitable physical device that is capable of being communicably coupled to device 410 and to a LAN.

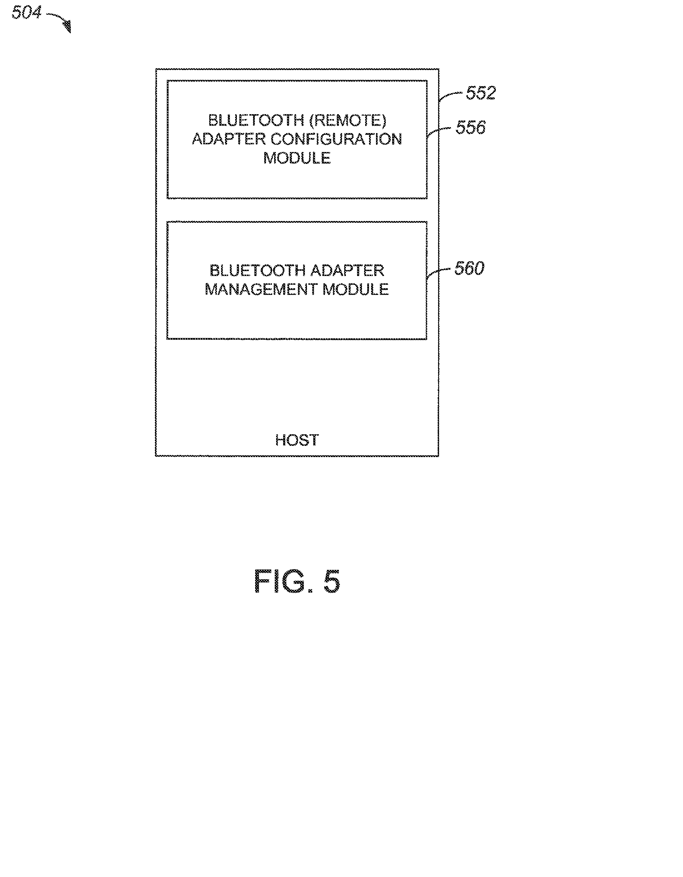

With reference to FIG. 5, a Bluetooth management server in accordance with an embodiment. A Bluetooth management server 604 includes a host 552, e.g., a computing system or server arrangement. Bluetooth management server 604 is arranged to manage substantially all Bluetooth adapters or access points (not shown) within a network to enable the Bluetooth adapters to support a Bluetooth device (not shown). A Bluetooth adapter configuration module 556 and a Bluetooth adapter management module 560 are provided, was shown, on host 552.

Bluetooth adapter configuration module 556 is arranged to cause a Bluetooth adapter, *e.g.,* Bluetooth adapter 432 of FIG. 4, to be configured to interact with server 604. That is, Bluetooth adapter configuration module 556 is generally arranged to configure a Bluetooth adapter (not shown) to enable the Bluetooth adapter to discover, and to be discovered by, other Bluetooth adapters (not shown).

Bluetooth adapter management module 560 is generally arranged to manage substantially all Bluetooth adapters (not shown) that are within the same network as server 604. Bluetooth adapter management module 560 may obtain information relating to an appropriate Bluetooth adapter (not shown) to substantially support a Bluetooth device (not shown). For example, Bluetooth adapter management module 560 may cause a series of Bluetooth adapters (not shown) to support a Bluetooth device (not shown) as the Bluetooth device moves through a network. As will be described in more detail below, Bluetooth adapter management module 560 may generally be configured to manipulate the addresses assigned to Bluetooth adapters (not shown) such that when a Bluetooth device (not shown) is supported by different Bluetooth adapters in turn, the Bluetooth device is effectively in communication with a single address that essentially moves between Bluetooth adapters.

In one embodiment, Bluetooth adapter configuration module 556 is arranged to remotely configure adapters and, hence, Bluetooth access points or aggregators (not shown). However, that if a Bluetooth adapter is part of host 552 or coupled to host 552, Bluetooth adapter configuration module 556 is arranged to substantially locally configure the adapter. By way of example, if host 504 is a Bluetooth aggregator, or a device which includes a Bluetooth adapter, then Bluetooth adapter configuration module 556 may operate to substantially locally configure the Bluetooth adapter.

It should be appreciated that in lieu of including host 552, a Bluetooth management server may instead be implemented as a service, *e.g*., an application that provides a service. That is, a Bluetooth management server, itself, may be a service package that is supported on a server arrangement.

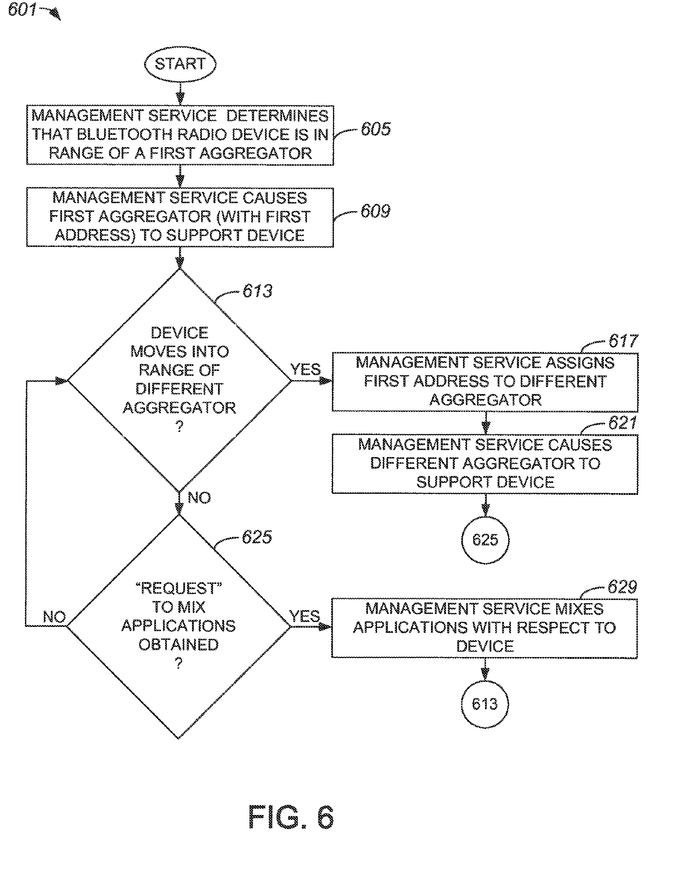

Referring next to FIG. 6, a method of supporting a Bluetooth radio device will be described from the point of view of a management service or server in accordance with an embodiment. A method 601 of supporting a Bluetooth radio device, *e.g.,* a Bluetooth headset, begins at step 605 in which a management service or server determines that the Bluetooth radio device is in the range of a first aggregator or access point. The first aggregator has a first address associated therewith. It should be appreciated that the Bluetooth radio device and the first aggregator are generally both registered with the management service such that the management service is effectively aware that the management service is managing both the Bluetooth radio device and the first aggregator.

After the management service determines that the Bluetooth radio device is in the range of the first aggregator, the management service causes the first aggregator to support the Bluetooth radio device in step 609. When the first aggregator supports the Bluetooth radio device, the first aggregator generally enables the Bluetooth radio device to substantially cooperate with a source, *e.g*., a non-Bluetooth device or a Bluetooth source, to transmit and/or receive information.

In step 613, it is determined whether the Bluetooth radio device has moved into the range of a different aggregator. When the Bluetooth radio device has moved into the range of a different aggregator and signals associated with the different aggregator are stronger than those associated with the first aggregator, even if the device is in the range of both the different aggregator and the first aggregator, the device is considered to be in the range of the different aggregator. That is, the device is typically considered to be in the range of an aggregator which provides the strongest signal. It should be appreciated that metrics in addition to, or in lieu of, signal strength may be used in determining whether a device is considered to be in the range of an aggregator. Such metrics may include, but are not limited to including, data corruption and/or congestion within the overall environment.

If it is determined in step 613 that the Bluetooth radio device has not moved into the range of a different aggregator, the indication in the described embodiment is that the Bluetooth radio device remains in the range of the first aggregator. Accordingly, process flow proceeds to step 625 in which it is determined whether the management service has obtained a "request" to mix applications. The management service is arranged to mix applications provided to the Bluetooth radio device substantially without having to modify the device. By way of example, if a user is using a Bluetooth radio device in the context of a call on an IP phone and another call comes in on a cell phone, the management service may allow the user to answer the call on the cell phone using the Bluetooth radio device.

If the determination in step 625 is that a request to mix applications has been obtained, the management service mixes the applications with respect to the Bluetooth radio device in step 629. Once the applications are mixed with respect to the device, process flow returns to step 613 in which it is determined if the Bluetooth radio device has moved into the range of a different aggregator.

Alternatively, if the determination in step 625 is that the management service has not obtained a request to mix applications, then the management service continues to cause the current aggregator, *e.g.,* the first aggregator, to support the Bluetooth radio device, and process flow returns to step 613 in which it is determined if the device has moved into the range of a different aggregator. When the determination in step 613 is that the device has moved into the range of a different aggregator, the management service assigns the first address to the different aggregator in step 617. That is, the management service causes the different aggregator to substantially act, or substantially behave, as if the different aggregator has the same address as the previous aggregator, *e.g.,* the first aggregator. By causing the different aggregator to act as if it has the same address as the previous aggregator, the management service effectively allows the Bluetooth radio device to be substantially seamlessly handed off from the previous aggregator to the different aggregator.

After the management service assigns the first address to the different aggregator, the management service causes the different aggregator to support the device in step 621. Once the management service causes the different aggregator to support the device, process flow proceeds to step 625 in which it is determined if the management server has obtained a request to mix applications.

In one embodiment, a Bluetooth radio device may be a Bluetooth headset, such as one commonly used in conjunction with a Bluetooth-enabled cellular phone. As an individual with a Bluetooth headset moves within a telecommunications network, *e.g.,* an IP network, that includes multiple Bluetooth aggregators or access points, the Bluetooth headset may be substantially supported by different Bluetooth aggregators that are, in turn, supported by or managed by a management server.

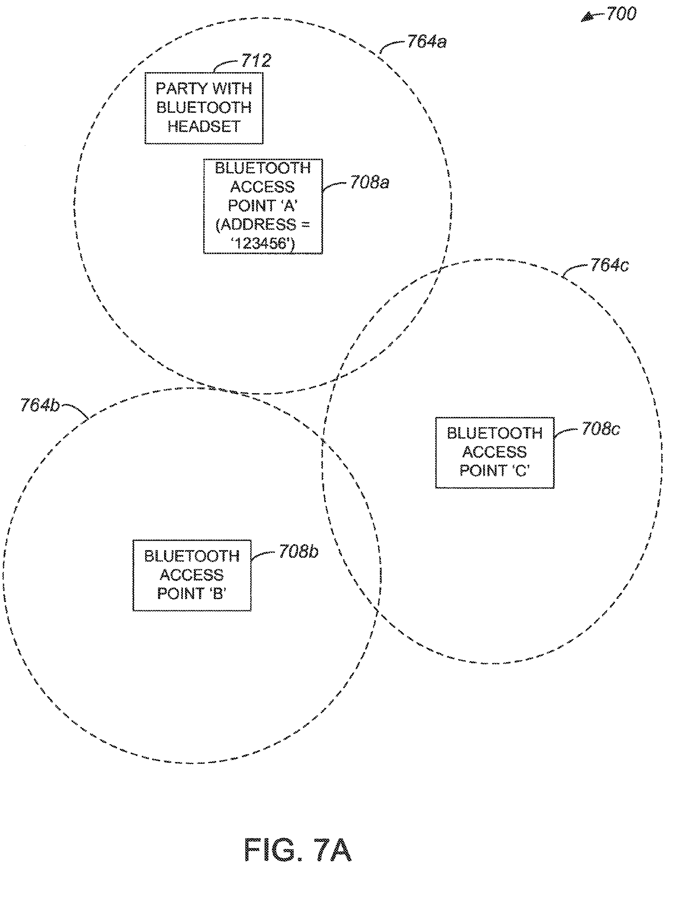

FIG. 7A is a diagrammatic representation of a network in which a party, *e.g.,* an individual, with a Bluetooth headset is in the range associated with a first Bluetooth access point in accordance with an embodiment. A network 700 includes a plurality of Bluetooth access points 708a-c. Each access point 708a-c has an associated communications range 764a-c, respectively. It should be appreciated that ranges 764a-c may be arranged to at least partially overlap, although ranges 764a-c are not limited to overlapping. The size of ranges 764a-c may generally vary widely.

At a time t1, a party with a Bluetooth headset 712 is within a range 764a associated with an access point 'A' 708a. As shown, access point 'A' 708a has an address '123456'. In general, while party 712 is within range 764a, access point 'A' 708a is aware of the presence of party 712 or, more specifically, the Bluetooth headset associated with party 712. Hence, when party 712 is within range 764a, communications involving party 712 are substantially supported by access point 'A' 708a.

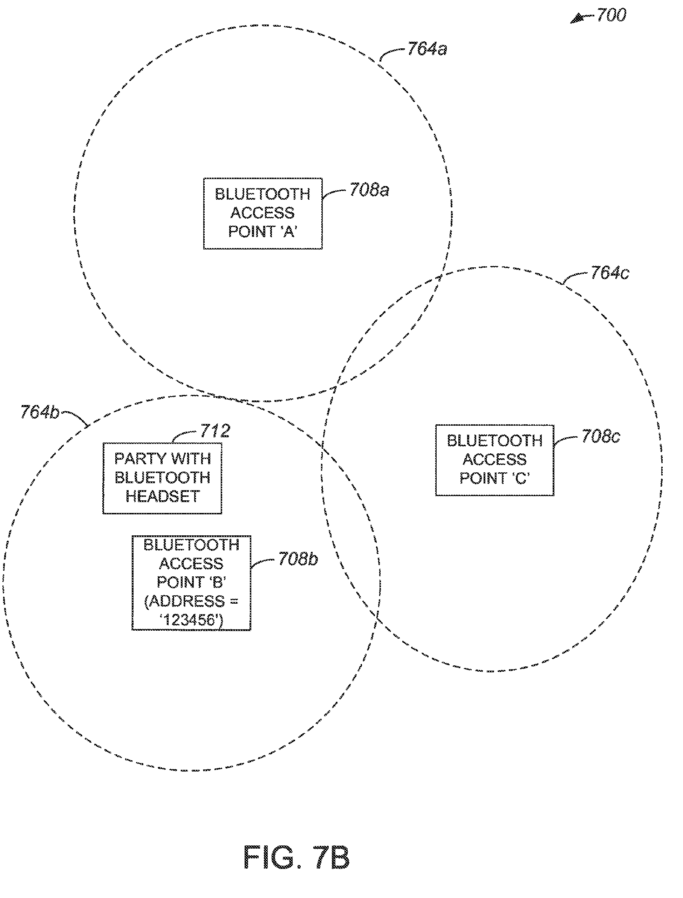

Party 712 may generally move within network 700. For example, if network 700 is associated with an office building, party 712 may move within the office building and, thus, may move substantially through and/or among ranges 764a-c. As shown in FIG. 7B, at a time t2, party 712 may no longer be in range 764a and may, instead, be in range 764b. While party 712 is within range 764b, access point 'B' 708b may effectively take over supporting communications involving party 712 from access point 'A' 708a. When access point 'B' 708b is aware of the presence of party 712 within range 764b, access point 'B' 708b may effectively obtain address '123456', *e.g.,* from a management service (not shown),. That is, rather than access point 'A' 708a having address '123456', access point 'B' 708b appears to party 712 as having address '123456' at time t2. Thus, party 712 continues to communicate with whichever access point appears to have address '123456' as party 712 moves within network 700.

Although only a few embodiments have been described in this disclosure, it should be understood that the disclosure may be embodied in many other specific forms without departing from the spirit or the scope of the present disclosure. By way of example, the disclosure has generally been described in terms of Bluetooth communications, or the Bluetooth wireless protocol. In general, the embodiments are not limited to Bluetooth communications and may include any suitable wireless communications. Such suitable wireless communications may include, but are not limited to including, communications which utilize radio waves.

When a Bluetooth radio device is effectively in the range of more than one aggregator, it should be appreciated that the aggregator to which the Bluetooth radio device is substantially assigned, *e.g*., the aggregator that is to support the Bluetooth radio device, may generally be the aggregator with which the Bluetooth radio device is currently exchanging the strongest signals. It should be appreciated, however, that aggregators may otherwise be prioritized such that when a Bluetooth radio device is in the range of an aggregator with the highest priority, the Bluetooth radio device is substantially assigned to the aggregator with the highest priority even if the Bluetooth radio device and a lower priority aggregator are exchanging stronger signals. Alternatively, in some embodiments, an aggregator may be assigned to a Bluetooth radio device until the Bluetooth radio device is out of a range associated with the aggregator, even when the strongest signals are associated with a different aggregator.

A network may generally include any number of access points or aggregators. The number of access points associated with a network may generally depend on a variety of different factors including, but not limited to including, the size of the network and the range supported by each access point.

As mentioned above, a management service or server may mix applications such that a Bluetooth radio device may be used at substantially the same time with respect to the applications. For example, applications may be mixed such that if a user, or a party with a Bluetooth radio device, is using the device to listen to music on his or her computer, he or she may hear a ring from a phone mixed into the audio stream provided to the Bluetooth radio device. Upon hearing the ring, the user may effectively switch from listening to music to handling a call from the phone on the Bluetooth radio device substantially without having to reconnect the Bluetooth radio device to the phone. As Bluetooth is effectively terminated at an access point or aggregator, multiple sources may be mixed substantially without Bluetooth devices being aware that such mixing is taking place. In addition, multiple sources may be redirected to non-Bluetooth devices such as speakers.

A management server or service has been described as including a Bluetooth adapter configuration module and a Bluetooth adapter management module. It should be appreciated that management server may also include a number of other modules without departing from the spirit or scope of the disclosure. Other modules that may be included in a management server may include, but are not limited to including, a module that performs bindings by proxying remote Bluetooth adapters and/or a module that allows users to access the management server using a web-based service.

Various policies may be set to substantially explicit allow information to be shared between particular Bluetooth devices and/or to prevent information from being shared between particular Bluetooth devices. For instance, although a first Bluetooth device and a second Bluetooth device may both be paired to a management server, a management server policy may be specified such that file transfer is substantially disallowed between the first Bluetooth device and the second Bluetooth device.

A management service may generally be implemented on any suitable device. Suitable devices may include, but are not limited to including, servers and systems that are configured to act as Bluetooth access points. By way of example, in one embodiment, a single system such as a computing system may be configured to act as both a Bluetooth access point and as a management server.

While a management service may be located on a single host, it should be appreciated that a management service may be distributed on any number of hosts within a network. Alternatively, a number of different management servers may be arranged to cooperate within a network. That is, a management service is not limited to being embodied as a single host within a network.

A Bluetooth stack may be terminated either at a Bluetooth access point or at the a management server. As different Bluetooth access points may effectively masquerade as one another, it should be appreciated the there may be logical choices that are made as to where to split a Bluetooth stack. An implementation in which a Bluetooth stack is split may be similar to the termination associated with WiFi access points which occur in layer 2. Tunneling back to a management server, in one embodiment, may enable roaming.

While Bluetooth access points and a management server may generally be used with respect to communicating audio information, it should be appreciated that other types of information may also be communicated. In one embodiment, data stored or maintained on a Bluetooth device may be provided to and, thus, displayed on a non-Bluetooth device. Similarly, data stored or maintained on a non-Bluetooth device may be provided to and displayed on a Bluetooth device. By way of example, a phonebook maintained on a Bluetooth-enabled cell phone may be provided to an IP phone through a Bluetooth access point and a management server, and displayed on the IP phone.

The embodiments may be implemented as hardware and/or software logic embodied in a tangible medium that, when executed, is operable to perform the various methods and processes described above. That is, the logic may be embodied as physical arrangements, modules, or components. A tangible medium may be substantially any suitable physical, computer-readable medium that is capable of storing logic which may be executed, *e.g.,* by a computing system, to perform methods and functions associated with the embodiments. Such computer-readable media may include, but are not limited to including, physical storage and/or memory devices. Executable logic may include code devices, computer program code, and/or executable computer commands or instructions.

It should be appreciated that a computer-readable medium, or a machine-readable medium, may include transitory embodiments and/or non-transitory embodiments, *e.g.,* signals or signals embodied in carrier waves. That is, a computer-readable medium may be associated with non-transitory tangible media and transitory propagating signals.

The steps associated with the methods of the present disclosure may vary widely. Steps may be added, removed, altered, combined, and reordered without departing from the spirit of the scope of the present disclosure. Therefore, the present examples are to be considered as illustrative and not restrictive, and the examples is not to be limited to the details given herein, but may be modified within the scope of the appended claims.

## Claims

1. A method comprising:
determining, using a management service arrangement, when a device is in a range of a first aggregator;
causing, using the management service arrangement, the first aggregator to support the device when it is determined that the device is in the range of the first aggregator;
determining, using the management service arrangement, when the device is in a range of a second aggregator and not in the range of the first aggregator; and
causing, using the management service arrangement, the second aggregator to support the device when it is determined that the device is in the range of the second aggregator and not in the range of the first aggregator.

2. The method of claim 1 wherein the device is a Bluetooth radio device and the first aggregator is a Bluetooth access point.

3. The method of claim 1 wherein causing the first aggregator to support the device includes providing, using the first aggregator, the device with information obtained through the management service arrangement.

4. The method of claim 1 wherein the first aggregator has a first address when the device is in the range of the first aggregator, and wherein causing the second aggregator to support the device includes assigning, using the management service arrangement, the first address to the second aggregator.

5. The method of claim 1 wherein causing the first aggregator to support the device includes causing the first aggregator to support communications between the device and a Bluetooth host arrangement.

6. The method of claim 1 wherein causing the first aggregator to support the device includes causing the first aggregator to support communications between the device and a non-Bluetooth source.

7. The method of claim 1 further including pairing the device to the first aggregator.

8. The method of claim 1 wherein the first aggregator includes a host and a Bluetooth adapter, the Bluetooth adapter including a Power over Ethernet (PoE) module, an authentication module, a Bluetooth radio configuration module, and a radio/antenna arrangement, optionally wherein the host is a non-Bluetooth device, further optionally wherein the host is an Internet Protocol (IP) phone.

9. A computer-readable medium comprising computer program code, the computer program code, when executed, configured to perform a method according to any preceding claim.

10. An apparatus comprising:
means for determining when a device is in a range of a first aggregator;
means for causing the first aggregator to support the device when it is determined that the device is in the range of the first aggregator;
means for determining when the device is in a range of a second aggregator and not in the range of the first aggregator; and
means for causing the second aggregator to support the device when it is determined that the device is in the range of the second aggregator and not in the range of the first aggregator.

11. A Bluetooth access point comprising:
an authentication module, the authentication module being arranged to dynamically authenticate a Bluetooth device in a range associated with the Bluetooth access point;
a Bluetooth radio configuration module, the Bluetooth radio configuration module being arranged to configure the Bluetooth radio based on configurations obtained from a management server; and
a radio/antenna arrangement.

12. The Bluetooth access point of claim 11 wherein the radio/antenna arrangement is arranged to allow communications with the Bluetooth device.

13. The Bluetooth access point of claim 11 wherein the authentication module, the Bluetooth radio configuration module, and the radio/antenna arrangement are included in all adapter, and wherein the Bluetooth access point further includes a host device, the adapter being coupled to the host device, optionally wherein the adapter is a cable or wherein the adapter further includes a Power over Ethernet (PoE) module arranged to provide at least one of the adapter and the host with power.

14. A management service arrangement comprising:
a Bluetooth adapter configuration module, the Bluetooth adapter configuration module being arranged to configure a Bluetooth access point to interact with the management service arrangement; and
a Bluetooth adapter management module; the Bluetooth adapter management module being arranged to manage at least the Bluetooth access point.

15. The management service arrangement of claim 14 wherein the Bluetooth adapter configuration module is arranged to remotely configure the Bluetooth access point.
